# EUROPEAN PATENT SPECIFICATION

(11) **EP 4 223 569 B1**
(45) Date of publication and mention of the grant of the patent: **01.01.2025**
(21) Application number: 23151630.3
(22) Date of filing: 13.01.2023
(51) Int. Cl.: B60K 6/387, B60K 6/48, B60K 6/547, B60W 10/08, B60W 10/11

(54) **SHIFT CONTROL DEVICE OF HYBRID VEHICLE**
SCHALTSTEUERUNGSVORRICHTUNG EINES HYBRIDFAHRZEUGS
DISPOSITIF DE COMMANDE DE CHANGEMENT DE VITESSE DE VÉHICULE HYBRIDE

(30) Priority: 04.02.2022 JP 2022016280
(43) Date of publication of application: 09.08.2023
(73) Proprietor: Suzuki Motor Corporation, Hamamatsu-shi, Shizuoka 432-8611 (JP)
(72) Inventor: TAKABAYASHI, Kaho, Hamamatsu-shi 432-8611 (JP); SAEKI, Hideyuki, Hamamatsu-shi 432-8611 (JP)
(74) Representative: Plasseraud IP

(56) References cited:
- EP-A1- 2 832 569
- EP-A1- 3 315 822
- DE-A1- 102016 111 840
- DE-A1- 102020 208 181

## Description

### [Technical Field]

This invention relates to a shift control device of a hybrid vehicle.

### [Background of the Invention]

As a transmission mounted on a vehicle such as an automobile, there is a parallel shaft gear type transmission in which gear pairs corresponding to multiple gear stages are provided between an input shaft and a counter shaft. In such a parallel shaft gear type transmission, a forward gear stage includes a synchronizing mechanism, but a reverse gear stage is of a plunge type without a synchronizing mechanism. Therefore, the reverse gear stage is formed by axially moving a reverse idler gear to mesh with a counter gear in a vehicle stop state.

As such a conventional technique, one described in JP H8-277891 A is known. JP H8-277891 A describes a vehicle shift device in which a part of a reverse idler shaft located when a reverse idler gear is freely rotatable and starts a reverse shift operation is formed to have a first outer diameter so that the axis of the reverse idler gear deviates from the axis of the reverse idler shaft and the other portion of the reverse idler shaft located when the reverse idler gear completes the reverse shift is formed to have a second outer diameter larger than the first outer diameter so that the axis of the reverse idler gear matches the axis of the reverse idler shaft. Accordingly, the one described in JP H8-277891 A can easily perform the reverse shift.

### [Prior Art]

### [Patent Literature]

[Patent Literature 1] JP H8-277891 A
[Patent Literature 2] EP 2 832 569 A1

### [Summary of the Invention]

### [Problem to be solved by the Invention]

Here, the reverse gear stage of the parallel shaft gear type transmission is formed when the reverse idler gear first meshes with an input gear of the input shaft and then meshes with a counter gear of the counter shaft. Therefore, the reverse gear stage is established when both the meshing of the reverse idler gear and the input gear and the meshing of the reverse idler gear and the counter gear are established.

On the other hand, as the transmission, there is an automatic transmission called AMT (Automated Manual Transmission) that automates a shift operation based on a parallel shaft gear type manual transmission, and the AMT performs the shift operation using an actuator.

However, the one described in JP H8-277891 A does not consider the meshing failure (gear block) of the reverse gear pair occurring in the automatic transmission configured as AMT. That is, when a driver forms a reverse gear stage by operating a shift lever himself, the driver can easily know that the gear block has occurred. However, since the shift operation itself is performed automatically by the actuator in the AMT, the driver does not know that the gear block has occurred. Then, since the vehicle does not move although the driver depresses an accelerator to move backward, the driver feels uncomfortable and the marketability of the vehicle decreases. Therefore, it has been demanded to eliminate the gear block when forming the reverse gear stage in a short time and to form the reverse gear stage early.

Document EP 2 832 569 A1 is another example of a gear shift control device for an hybrid vehicle comprising a combustion engine, a transmission that can be shifted by an actuator, and an electric motor provided in a power transmission path between the transmission and the wheels.

Here, an object of this invention is to provide a shift control device of a hybrid vehicle capable of eliminating a gear block when forming a reverse gear stage in a short time and forming the reverse gear stage early. [Means to solve the problem] [0009] In order to solve the above-described problems, according to aspects of this invention, there is provided a shift control device of a hybrid vehicle according to claim 1, the device includes: an engine generating a driving force for running; a transmission forming a gear stage of a forward gear stage or a reverse gear stage and shifting a rotation input from the engine; an actuator performing a shifting operation to the forward gear stage and the reverse gear stage; and an electric motor provided in a power transmission path between the transmission and a drive wheel and generating a driving force for running, wherein in the transmission, a reverse idler gear sequentially moves from a neutral position to a reverse gear stage formation position, allowing the reverse idler gear to mesh with both a first gear and a second gear to complete the formation of the reverse gear stage, through a first position allowing the reverse idler gear to start to mesh with the first gear and a second position allowing the reverse idler gear to start to mesh with the second gear while meshing with the first gear, wherein a control unit controlling the driving of the actuator is provided to form the reverse gear stage, wherein the control unit performs a retry control of forming the reverse gear stage again when the formation of the reverse gear stage fails, and wherein when the reverse idler gear is not able to mesh with the first gear and stops at a position between the neutral position and the first position and when the reverse idler gear is not able to mesh with the second gear and stops at a position between the first position and the second position, the retry control of a different operation is performed.

### [Effect of the Invention]

In this way, according to this invention, it is possible to provide a shift control device of a hybrid vehicle capable of eliminating a gear block when forming a reverse gear stage in a short time and forming the reverse gear stage early.

The shift control device for the hybrid vehicle may also comprise the following features, taken alone or in combination:
- When the reverse idler gear is not able to mesh with the first gear and stops at a position between the neutral position and the first position, the actuator is driven so that the reverse idler gear is moved toward the neutral position once to be separated from the first gear and then is moved toward the first position again.
- The control unit drives the actuator so that the reverse idler gear is pressed against the second gear and drives the electric motor so that the phase of the second gear with respect to the reverse idler gear is changed when the reverse idler gear is not able to mesh with the second gear and stops at a position between the first position and the second position.
- The control unit changes the phase of the second gear with respect to the reverse idler gear by driving the electric motor in the rotation direction when the vehicle moves backward.
- The control unit drives the actuator to form the reverse gear stage again after forming the forward gear stage once when the electric motor is not able to be driven.[Brief description of figures]

[Fig. 1] Fig. 1 is a configuration diagram of a vehicle including a shift control device of a hybrid vehicle according to an embodiment of this invention.
[Fig. 2] Fig. 2 is a diagram showing an establishment process of a reverse gear stage of a transmission by the shift control device of the hybrid vehicle according to an embodiment of this invention.
[Fig. 3] Fig. 3 is a flowchart showing an operation of the shift control device of the hybrid vehicle according to an embodiment of this invention.

### [Embodiment(s) of the Invention]

A shift control device of a hybrid vehicle according to embodiments of this invention includes: an engine generating a driving force for running; a transmission forming a gear stage of a forward gear stage or a reverse gear stage and shifting a rotation input from the engine; an actuator performing a shifting operation to the forward gear stage and the reverse gear stage; and an electric motor provided in a power transmission path between the transmission and a drive wheel and generating a driving force for running, wherein in the transmission, a reverse idler gear sequentially moves from a neutral position to a reverse gear stage formation position, allowing the reverse idler gear to mesh with both a first gear and a second gear to complete the formation of the reverse gear stage, through a first position allowing the reverse idler gear to start to mesh with the first gear and a second position allowing the reverse idler gear to start to mesh with the second gear while meshing with the first gear, wherein a control unit controlling the driving of the actuator is provided to form the reverse gear stage, wherein the control unit performs a retry control of forming the reverse gear stage again when the formation of the reverse gear stage fails, and wherein when the reverse idler gear is not able to mesh with the first gear and stops at a position between the neutral position and the first position and when the reverse idler gear is not able to mesh with the second gear and stops at a position between the first position and the second position, the retry control of a different operation is performed. Accordingly, the shift control device of the hybrid vehicle according to an embodiment of this invention can eliminate the gear block when forming the reverse gear stage in a short time and form the reverse gear stage early.

### [Embodiments]

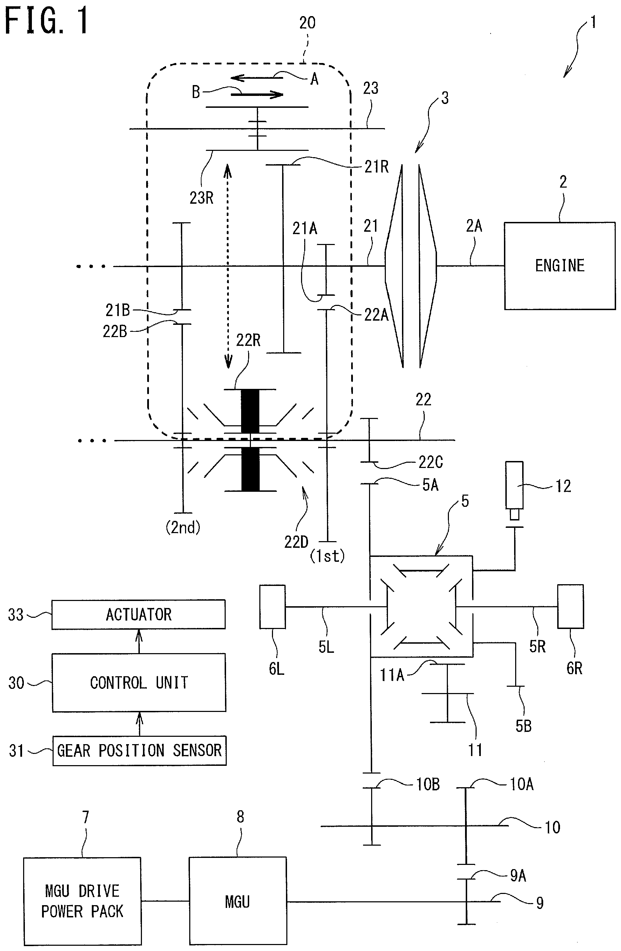

Hereinafter, a hybrid vehicle equipped with a shift control device according to an embodiment of this invention will be described in detail with reference to the drawings. In Fig. 1, a vehicle 1 according to an embodiment of this invention includes an engine 2 which generates a driving force for running, a transmission 20 which is connected to the engine 2 through a clutch 3, and a front differential 5 which transmits a driving force output from the transmission 20 to left and right drive wheels 6L and 6R to be differentially rotatable.

The transmission 20 forms a forward gear stage or a reverse gear stage and outputs a rotation output from the engine 2 after changing a gear ratio according to one of the plurality of gears. In this embodiment, the transmission 20 is configured as an AMT (Automated Manual Transmission) that automates a shift operation based on the structure of a parallel shaft gear type manual transmission.

The vehicle 1 includes an MGU (Motor Generator Unit) 8 which is an electric motor for generating a driving force for running, an MGU drive power pack 7 which supplies electric power to the MGU 8, and a reduction shaft 10 which reduces the rotation of the MGU 8 and transmits the rotation to the front differential 5.

The vehicle 1 is configured as a hybrid vehicle which can run by at least one power of the power transmitted from the engine 2 to the front differential 5 through the clutch 3 and the transmission 20 and the power transmitted from the MGU 8 to the front differential 5 through the reduction shaft 10.

The transmission 20 includes an input shaft 21, a counter shaft 22, and a reverse idler shaft 23 which are arranged in parallel to one another.

A first-speed input gear 21A, an input gear 21R, and a second-speed input gear 21B are arranged on the input shaft 21 in order from the engine 2. The first-speed input gear 21A, the input gear 21R, and the second-speed input gear 21B are fixed to the input shaft 21 and rotate together with the input shaft 21. The input gear 21R constitutes the first gear of this invention. When the clutch 3 is engaged, the rotation of a crankshaft 2A of the engine 2 is transmitted to the input shaft 21 to rotate the input shaft 21.

A final drive gear 22C, a first-speed counter gear 22A, and a second-speed counter gear 22B are arranged on the counter shaft 22 in order from the engine 2. The final drive gear 22C is fixed to the counter shaft 22 and rotates together with the counter shaft 22. The first-speed counter gear 22A and the second-speed counter gear 22B are provided in the counter shaft 22 to be rotatable. The first-speed counter gear 22A meshes with the first-speed input gear 21A at all times and the second-speed counter gear 22B meshes with the second-speed input gear 21B at all times.

A sleeve 22D having a synchronizing mechanism (synchromesh) is disposed between the first-speed counter gear 22A and the second-speed counter gear 22B of the counter shaft 22. The sleeve 22D is provided to be rotatable together with the counter shaft 22 and movable in the axial direction.

When the sleeve 22D moves from the neutral position toward the engine 2 in the axial direction, the sleeve 22D meshes with the first-speed counter gear 22A while absorbing the rotational speed difference with the first-speed counter gear 22A by the synchronizing mechanism and rotates the first-speed counter gear 22A together with the counter shaft 22. As a result, a first-speed gear is formed as a forward gear stage.

When the sleeve 22D moves from a neutral position toward the side opposite to the engine 2 in the axial direction, the sleeve 22D meshes with the second-speed counter gear 22B while absorbing the rotational speed difference with the second-speed counter gear 22B by the synchronizing mechanism and rotates the second-speed counter gear 22B together with the counter shaft 22. As a result, a second-speed gear is formed as a forward gear stage.

A counter gear 22R is disposed between the first-speed counter gear 22A and the second-speed counter gear 22B of the counter shaft 22. The counter gear 22R is fixed to the sleeve 22D and rotates together with the counter shaft 22. The counter gear 22R constitutes the second gear of this invention. In this way, the type of transmission mechanism of the forward gear stage of the transmission 20 is a constant mesh type with a synchronizing mechanism. The constant mesh type is excellent in quietness or operability and the like since gear stages can be switched without generating gear noise even in a slow running state.

A reverse idler gear 23R is disposed on the reverse idler shaft 23. The reverse idler gear 23R is provided in the reverse idler shaft 23 to be rotatable and movable in the axial direction (the directions indicated by the arrows A and B). When the reverse idler gear 23R axially moves on the reverse idler shaft 23 and meshes with both the input gear 21R and the counter gear 22R, a reverse gear stage is formed. Since the reverse gear stage is formed, the rotation transmitted from the engine 2 to the input gear 21R is reversed by the reverse idler gear 23R and the counter gear 22R rotates in a direction opposite to the rotation direction during the forward movement so that the vehicle 1 moves backward. In this way, the type of the transmission mechanism for the reverse gear stage of the transmission 20 is a plunge type without a synchronizing mechanism. The plunge type is superior in terms of manufacturing cost because the number of parts can be reduced.

The axial end portions of the teeth of the reverse idler gear 23R, the input gear 21R, and the counter gear 22R are chamfered (mounted or tapered) so that they can easily enter between the teeth and start meshing smoothly.

Gear stages that can be established in the transmission 20 include a gear stage for forward movement (hereinafter, also referred to as a forward gear stage) and a gear stage for reverse movement (hereinafter, also referred to as a reverse gear stage). The number of forward gear stages varies depending on the specifications of the vehicle 1 and is not limited to the first-speed gear and second-speed gear.

The vehicle 1 includes a control unit 30. The control unit 30 is configured as a computer unit including a CPU (Central Processing Unit), a RAM (Random Access Memory), a ROM (Read Only Memory), a flash memory storing backup data or the like, an input port, and an output port. The ROM of the computer unit stores various constants, various maps, etc., and programs that define control details. The control unit 30 performs various controls by allowing the CPU to execute programs stored in the ROM using the RAM as a work area.

Various sensors including a gear position sensor 31 are connected to the control unit 30. The gear position sensor 31 detects the axial position of the reverse idler shaft 23 of the reverse idler gear 23R in the transmission 20 and transmits the detection result to the control unit 30.

The shifting operation to the forward gear stage and the reverse gear stage of the transmission 20 is performed by an actuator 33. The actuator 33 is connected to the control unit 30 and is controlled by the control unit 30. The actuator 33 drives the clutch 3 and the transmission 20 so that the transmission mechanism of the transmission 20 forms gears of the forward gear stage and the reverse gear stage by the control of the control unit 30.

The gear of the transmission 20 is switched according to the operating position of a shift lever (not shown) operated by the driver. The signal of the operating position of the shift lever is transmitted to the control unit 30. As the operating position of the shift lever, a P range which is a parking position, an R range which is a reverse position, an N range which is a neutral position, and a D range which is a forward position are provided.

For example, when the driver sets the shift lever to the D range, the control unit 30 drives the actuator 33 according to the accelerator opening degree and the like, and shifts gears between a plurality of forward gear stages. Further, when the driver switches the shift lever from the D range to the R range, the control unit 30 drives the actuator 33 and switches the gear from the forward gear stage to the reverse gear stage.

The output shaft of the transmission 20 is connected to the left and right drive wheels 6L and 6R through the front differential 5 and the left and right drive shafts 5L and 5R.

An output gear 9A is provided in the output shaft 9 of the MGU 8. The reduction shaft 10 is provided between the output shaft 9 and the front differential 5 and reduction gears 10A and 10B are fixed to the reduction shaft 10. The reduction gear 10A meshes with the output gear 9A and the reduction gear 10B meshes with a ring gear 5A of the front differential 5. The driving force generated by the MGU 8 is transmitted to the front differential 5 while the rotation is reduced by the reduction gears 10A and 10B. That is, the MGU 8 is provided in a power transmission path between the transmission 20 and the drive wheels 6L and 6R so that the driving force can be transmitted. Then, the MGU 8 is provided so that the driving force can be transmitted to the drive wheels 6L and 6R regardless of the gear stage of the transmission 20.

Additionally, a parking gear 11A fixed onto the parking shaft 11 is provided in the vicinity of the front differential 5 and the parking gear 11A meshes with a gear 5B of the front differential 5 to regulate the movement of the vehicle 1. A rotation sensor 12 is provided in the vicinity of the gear 5B and the detection signal of the rotation sensor 12 is output to the control unit 30.

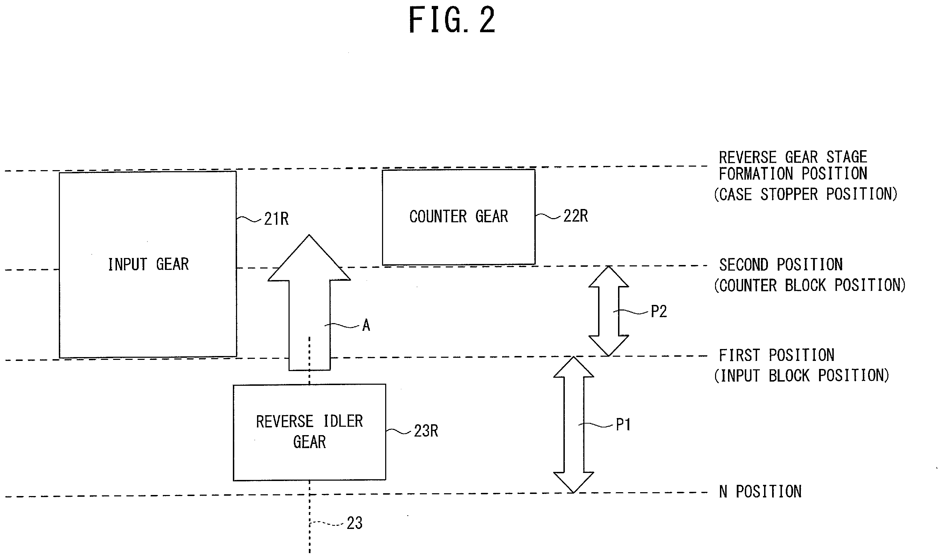

In Fig. 2, the reverse idler gear 23R moves on the reverse idler shaft 23 in the direction indicated by the arrow A when forming the reverse gear stage. The positions that the reverse idler gear 23R can take in the axial direction include a neutral position (indicated as N position in the figure) and a reverse gear stage forming position. However, in addition to this, when gear block occurs, the reverse idler gear 23R may stop at a first position and a second position, which will be described later. Additionally, the position of the reverse idler gear 23R is detected by the gear position sensor 31 and the position information of the reverse idler gear 23R is transmitted to the control unit 30.

The neutral position is a position in which the reverse idler gear 23R does not mesh with either the input gear 21R or the counter gear 22R. When the shift lever is set to the N range or the D range, the actuator 33 operates the reverse idler gear 23R to the neutral position.

The first position is a position in which the reverse idler gear 23R starts to mesh with the input gear 21R. Then, the first position is a position in which the reverse idler gear 23R stops when the teeth of the reverse idler gear 23R and the teeth of the input gear 21R interfere with each other and a gear block that prevents the teeth from entering therebetween occurs. Since this is a position in which the reverse idler gear 23R stops when cannot mesh with the input gear 21R, this is also referred to as an input block position.

The second position is a position in which the reverse idler gear 23R starts to mesh with the counter gear 22R while meshing with the input gear 21R. Then, the second position is a position in which the reverse idler gear 23R stops when the teeth of the reverse idler gear 23R and the teeth of the counter gear 22R interfere with each other and a gear block that prevents the teeth from entering therebetween occurs. Since this is a position in which the reverse idler gear 23R cannot mesh with the counter gear 22R, this is also referred to as a counter block position.

The reverse gear stage formation position is a position in which the reverse idler gear 23R meshes with both the input gear 21R and the counter gear 22R. That is, the reverse gear stage formation position is a position in which the meshing of three gears of the reverse idler gear 23R, the input gear 21R, and the counter gear 22R is established. Since the reverse gear stage formation position in which the switching to the reverse gear stage is completed is a position in which the reverse idler gear 23R stops in contact with a stopper of a transmission case (not shown), the reverse gear stage formation position is also referred to as a case stopper position.

That is, when the reverse idler gear 23R sequentially moves from the neutral position to the reverse gear stage formation position through the first position and the second position, the formation of the gear of the reverse gear stage is completed.

Here, a state in which the reverse idler gear 23R stops at a position P1 between the neutral position and the first position (hereinafter, also referred to as the gear block at the position P1) may occur.

When the phases of the reverse idler gear 23R and the input gear 21R do not match each other, the reverse idler gear 23R cannot mesh with the input gear 21R and stops at the position P1 between the neutral position and the first position.

Further, even when the gear block does not occur at the position P1, a state in which the reverse idler gear stops at the position P2 between the first position and the second position (hereinafter, also referred to as the gear block at the position P2) may occur. When the phases of the reverse idler gear 23R and the counter gear 22R do not match each other, the reverse idler gear 23R cannot mesh with the counter gear 22R and stops at the position P2 between the first position and the second position.

Such a gear block occurs as state in which the teeth of the gears cannot enter therebetween due to the interference when the phases of the gears do not match even when the gears for the reverse gear stage are chamfered. Then, since the phases of the gears do not change even when the reverse idler gear 23R is pressed against the input gear 21R or the counter gear 22R, the gear block is not naturally eliminated.

When the gear block occurs, the actuator 33 is controlled to form the reverse gear stage again after forming the forward gear stage (for example, the first-speed gear) through the neutral once. Accordingly, the phases of the gears are changed and the gear block can be eliminated.

However, when the reverse gear stage is formed again after the forward gear stage is formed once, there is a case in which the reverse gear stage cannot be formed early by eliminating the gear block in a short time since the moving distance of each part inside the transmission 20 is long and the number of parts to be moved is large. If it takes time to eliminate the gear block and form the reverse gear stage, the driver depresses an accelerator pedal before the formation of the reverse gear stage is completed. Accordingly, since the engine rotation speed increases, a problem arises in that the engagement control of the clutch 3 through the actuator 33 is difficult or the drivability is impaired.

Here, in order to eliminate the gear block when forming the reverse gear stage in a short time, the control unit 30 performs a first retry control of driving the actuator 33 so that the reverse idler gear 23R is moved toward the neutral position once to be separated from the input gear 21R and then is moved toward the first position again to sequentially move to the reverse gear stage formation position through the first position and the second position when the reverse idler gear 23R cannot mesh with the input gear 21R and stops at the position P1 between the neutral position and the first position.

Further, the control unit 30 performs a second retry control of driving the actuator 33 so that the reverse idler gear 23R is pressed against the counter gear 22R and driving the MGU 8 so that the phase of the counter gear 22R with respect to the reverse idler gear 23R is changed when the reverse idler gear 23R cannot mesh with the counter gear 22R and stops at the position P2 between the first position and the second position.

Specifically, the control unit 30 changes the phase of the counter gear 22R with respect to the reverse idler gear 23R by rotating the counter gear 22R while driving the MGU 8 in the rotation direction when the vehicle 1 moves backward.

Additionally, when the MGU 8 cannot be driven, the control unit 30 drives the actuator 33 so that the reverse gear stage is formed again after the forward gear stage is formed once. When the MGU 8 cannot be driven, a charge state of a battery inside the MGU drive power pack 7 may be low, an inverter may be broken, or the MGU 8 may be broken. Then, these cases are notified to the driver by a separate notification device and the driver can grasp the situation.

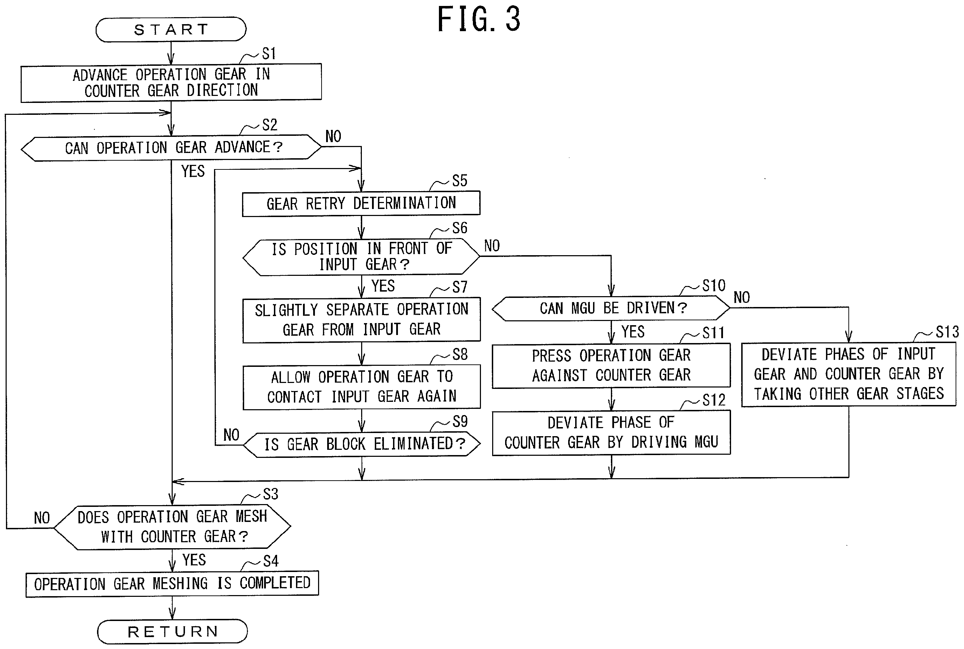

Next, an operation of the control unit 30 when the reverse gear stage is selected by the driver will be described with reference to the flowchart shown in Fig. 3. Additionally, in Fig. 3, the reverse idler gear 23R to be operated by the actuator 33 is referred to as an operation gear.

In step S1, the control unit 30 moves the reverse idler gear 23R toward the counter gear 22R to reach the reverse gear stage formation position. Here, the control unit 30 drives the actuator 33 so that the reverse idler gear 23R located at the neutral position moves toward the reverse gear stage formation position (the direction of the arrow A in Figs. 1 and 2).

Next, in step S2, the control unit 30 determines whether or not the reverse idler gear 23R can be moved forward. Here, the control unit 30 determines whether or not the reverse idler gear 23R moves toward the reverse gear stage formation position on the basis of the detection information of the gear position sensor 31.

In step S3, the control unit 30 determines whether or not the reverse idler gear 23R meshes with the counter gear 22R when the reverse idler gear 23R moves toward the reverse gear stage formation position and the determination in step S2 is YES. Here, the control unit 30 determines that the reverse idler gear 23R meshes with the counter gear 22R when it is detected that the reverse idler gear 23R reaches the reverse gear stage formation position on the basis of the detection information of the gear position sensor 31.

The control unit 30 returns to step S2 when the reverse idler gear 23R does not mesh with the counter gear 22R and the determination of step S3 is NO. When the reverse idler gear 23R meshes with the counter gear 22R and the determination of step S3 is YES, the control unit determines that the meshing of the reverse idler gear 23R is completed in step S4 and ends this operation.

The control unit 30 performs a retry determination in step S5 since the gear block occurs at the position P1 or the position P2 (see Fig. 2) when the determination of step S2 is NO. The retry determination is a process of determining that the reverse gear stage is formed again. Additionally, it is preferable that the control unit 30 performs the retry determination when the gear block continues for a predetermined time. Further, it is preferable that the predetermined time is determined on the basis of the oil temperature of the transmission oil of the transmission 20.

Next, the control unit 30 determines whether or not the position of the reverse idler gear 23R is a position in front of the input gear 21R in step S6. Here, the control unit 30 determines that the position of the reverse idler gear 23R is a position in front of the input gear 21R (a position in which the reverse idler gear cannot mesh with the input gear 21R) when the reverse idler gear 23R is located at the position P1 on the basis of the detection information of the gear position sensor 31. In other words, in step S6, the control unit 30 determines whether or not the gear block occurs at the position P1.

Since the gear block occurs at the position P1 when the control unit 30 determines that the position of the reverse idler gear 23R is a position in front of the input gear 21R in step S6, the reverse idler gear 23R is returned only by a short distance toward the neutral position (the direction indicated by the arrow B in Fig. 1) to separate the reverse idler gear 23R slightly from the input gear 21R in step S7.

Next, in step S8, the control unit 30 moves the reverse idler gear 23R toward the input gear 21R (the direction indicated by the arrow A in Fig. 1) so that the reverse idler gear 23R contacts the input gear 21R again. Accordingly, the phase of the reverse idler gear 23R changes so that the reverse gear stage can be smoothly formed, the teeth of the reverse idler gear 23R enter the teeth of the input gear 21R, and the reverse idler gear 23R moves toward the reverse gear stage formation position.

Next, the control unit 30 determines whether or not the gear block is eliminated in step S9, proceeds to step S3 when the gear block is eliminated, and returns to step S5 when the gear block is not eliminated.

On the other hand, since the gear block occurs at the position P2 when the control unit 30 determines that the position of the reverse idler gear 23R is not a position in front of the input gear 21R in step S6, the control unit determines whether or not the MGU 8 can be driven in step S10.

When the control unit 30 determines that the MGU 8 can be driven in step S10, the control unit presses the reverse idler gear 23R against the counter gear 22R in step S11, drives the MGU 8 to deviate the phase of the counter gear 22R in step S12, and proceeds to step S3. By the execution of steps S11 and S12, the phase of the counter gear 22R changes to smoothly form the reverse gear stage, the teeth of the reverse idler gear 23R enter the teeth of the counter gear 22R, and the reverse idler gear 23R moves toward the reverse gear stage formation position. Next, the control unit 30 proceeds to step S3 and determines whether or not the reverse idler gear 23R meshes with the counter gear 22R. That is, the control unit 30 determines whether or not the reverse idler gear 23R reaches the reverse gear stage formation position on the basis of the detection information of the gear position sensor 31. When the determination of step S3 is NO, the routine returns to step S2.

When the control unit 30 determines that the MGU 8 cannot be driven in step S10, other gear stages (marked as a gear stage in the figure) are formed in step S13, the phases of the input gear 21R and the counter gear 22R are deviated from each other, and the shift operation to the reverse gear stage is performed again. Then, the routine proceeds to step S3. Specifically, in step S13, the control unit 30 returns the reverse idler gear 23R to the neutral position, stops the formation of the reverse gear stage once, and forms other gear stages (for example, a first-speed gear stage). Accordingly, the phase of the reverse idler gear 23R with respect to the input gear 21R and the counter gear 22R changes due to the rotation of the engine 2 and the reverse gear stage can be smoothly formed. Then, the reverse idler gear 23R moves toward the reverse gear stage formation position. Next, the control unit 30 proceeds to step S3 and determines whether or not the reverse idler gear 23R reaches the reverse gear stage formation position on the basis of the detection information of the gear position sensor 31. When the determination of step S3 is NO, the routine returns to step S2.

As described above, in this embodiment, the control unit 30 drives the actuator 33 so that the reverse idler gear 23R is moved once toward the neutral position to be separated from the input gear 21R and then is moved toward the first position again when the reverse idler gear 23R cannot mesh with the input gear 21R and stops at the position P1 between the neutral position and the first position.

Accordingly, the phase of the reverse idler gear 23R with respect to the input gear 21R changes to a position in which the reverse idler gear can mesh with the input gear 21R while the reverse idler gear 23R is moved to be separated from the input gear 21R once and then is moved again to mesh with the input gear 21R. Therefore, when the reverse idler gear 23R is moved again to mesh with the input gear 21R, the reverse idler gear 23R can mesh with the input gear 21R. Accordingly, it is possible to eliminate the gear block and to form the reverse gear stage early.

Further, since the reverse idler gear 23R can mesh with the input gear 21R just by reciprocating the reverse idler gear 23R by a short distance, it is possible to eliminate the gear block in a short time and to form the reverse gear stage early.

As a result, it is possible to eliminate the gear block when forming the reverse gear stage in a short time and to form the reverse gear stage early.

Further, in this embodiment, the control unit 30 drives the actuator 33 so that the reverse idler gear 23R is pressed against the counter gear 22R and drives the MGU 8 so that the phase of the counter gear 22R with respect to the reverse idler gear 23R is changed when the reverse idler gear 23R cannot mesh with the counter gear 22R and stops at the position P2 between the first position and the second position.

Accordingly, since the phase of the counter gear 22R with respect to the reverse idler gear 23R is changed by the driving of the MGU 8, the reverse idler gear 23R can mesh with the counter gear 22R.

Further, since the reverse idler gear 23R can mesh with the counter gear 22R just by driving the MGU 8 without moving the reverse idler gear 23R, it is possible to eliminate the gear block in a short time and to form the reverse gear stage early. The operation of the retry control (the second retry control) is an operation different from the operation of the retry control (the first retry control) when the reverse idler gear 23R stops at the position P1 between the neutral position and the first position and this operation can be performed in a shorter time than the first retry control and can be performed highly effectively according to the situation.

As a result, it is possible to eliminate the gear block when forming the reverse gear stage in a short time and to form the reverse gear stage early. In addition, even when the engine 2 is stopped by the idling stop function, the gear block can be eliminated in a short time by driving the MGU 8.

Further, in this embodiment, the control unit 30 changes the phase of the counter gear 22R with respect to the reverse idler gear 23R by driving the MGU 8 in the rotation direction when the vehicle 1 moves backward.

Accordingly, since the reverse idler gear 23R meshes with the counter gear 22R to eliminate the gear block by driving the MGU 8 in the rotation direction when the vehicle moves backward, the vehicle 1 can be moved backward while the rotation direction of the MGU 8 is maintained as the backward movement direction after the gear block is eliminated. Further, although the vehicle 1 moves slightly due to the elimination of the gear block, the movement of the vehicle 1 in the direction intended by the driver does not make the driver feel uncomfortable and the marketability is improved.

Further, in this embodiment, when the MGU 8 cannot be driven, the control unit 30 drives the actuator 33 to form the reverse gear stage again after forming the forward gear stage once.

In this way, since the actuator 33 is driven to form the reverse gear stage again after forming the forward gear stage once, the phases of the input gear 21R and the reverse idler gear 23R change and the reverse gear stage can be smoothly formed. Further, the reverse gear stage can be formed even when the MGU 8 cannot be driven.

### (DESCRIPTION OF REFERENCE NUMERALS)

1 ... Vehicle (hybrid vehicle), 2 ... Engine, 6L, 6R ... Drive wheel, 8 ... MGU (electric motor), 20 ... Transmission, 21R ... Input gear (first gear), 22R ... Counter gear (second gear), 23R ... Reverse idler gear, 30 ... Control unit, 33 ... Actuator, P1 ... Position (position between neutral position and first position), P2 ... Position (position between first position and second position)

## Claims

1. A shift control device of a hybrid vehicle comprising:
an engine (2) generating a driving force for running;
a transmission (20) forming a gear stage of a forward gear stage or a reverse gear stage and shifting a rotation input from the engine (2);
an actuator (33) performing a shifting operation to the forward gear stage and the reverse gear stage; and
an electric motor (8) provided in a power transmission path between the transmission (20) and a drive wheel (6L, 6R) and generating a driving force for running,
wherein in the transmission (20), a reverse idler gear (23R) sequentially moves from a neutral position to a reverse gear stage formation position, allowing the reverse idler gear (23R) to mesh with both a first gear (21R) and a second gear (22R) to complete the formation of the reverse gear stage, through a first position allowing the reverse idler gear (23R) to start to mesh with the first gear (21R) and a second position allowing the reverse idler gear (23R) to start to mesh with the second gear (22R) while meshing with the first gear (21R), the shift control device being **characterized in that**:
a control unit (30) controlling the driving of the actuator (33) is provided to form the reverse gear stage,
the control unit (30) performs a retry control of forming the reverse gear stage again when the formation of the reverse gear stage fails, and
a first retry control is performed when the reverse idler gear (23R) is not able to mesh with the first gear (21R) and stops at a position (P1) between the neutral position and the first position and
a second retry control, different from the first retry control, is performed when the reverse idler gear (23R) is not able to mesh with the second gear (22R) and stops at a position (P2) between the first position and the second position.

2. The shift control device for the hybrid vehicle as claimed in claim 1,
wherein when the reverse idler gear (23R) is not able to mesh with the first gear (21R) and stops at a position (P1) between the neutral position and the first position, the actuator (33) is driven so that the reverse idler gear (23R) is moved toward the neutral position once to be separated from the first gear (21R) and then is moved toward the first position again.

3. The shift control device for the hybrid vehicle as claimed in claim 1 or 2,
wherein the control unit (30) drives the actuator (33) so that the reverse idler gear (23R) is pressed against the second gear (22R) and drives the electric motor (8) so that the phase of the second gear (22R) with respect to the reverse idler gear (23R) is changed when the reverse idler gear (23R) is not able to mesh with the second gear (22R) and stops at a position (P2) between the first position and the second position.

4. The shift control device for the hybrid vehicle as claimed in claim 3,
wherein the control unit (30) changes the phase of the second gear (22R) with respect to the reverse idler gear (23R) by driving the electric motor (8) in the rotation direction when the vehicle (1) moves backward.

5. The shift control device for the hybrid vehicle as claimed in claim 3,
wherein the control unit (30) drives the actuator (33) to form the reverse gear stage again after forming the forward gear stage once when the electric motor (8) is not able to be driven.

## Patentansprüche

1. Schaltsteuerungsvorrichtung eines Hybridfahrzeugs, umfassend:
einen Antrieb (2), welcher eine antreibende Kraft für ein Bewegen erzeugt,
ein Getriebe (20), welche eine Gangstufe einer Vorwärtsgangstufe oder einer Rückwärtsgangstufe bildet und eine Rotationseingabe des Antriebs (2) schaltet;
ein Aktuator (33), welcher einen Schaltvorgang zu der Vorwärtsgangstufe und der Rückwärtsgangstufe durchführt, und
einen elektrischen Motor (8), welcher in einem Leistungsübertragungsweg zwischen dem Getriebe (20) und einem Antriebsrad (6L, 6R) bereitgestellt ist und eine antreibende Kraft für ein Bewegen erzeugt,
wobei, in dem Getriebe (20), sich ein Rückwärtsgang-Zwischenrad (23R) von einer Neutralposition zu einer Rückwärtsgangstufe-Bildungsposition sequentiell bewegt, welche dem Rückwärtsgang-Zwischenrad (23R) ermöglicht, sowohl mit einem ersten Zahnrad (21R) als auch mit einem zweiten Zahnrad (22R) zu kämmen, um die Bildung der Rückwärtsgangstufe abzuschließen, durch eine erste Position, welche dem Rückwärtsgang-Zwischenrad (23R) ermöglicht, zu beginnen, mit dem ersten Zahnrad (21R) zu kämmen, und einer zweiten Position, welche dem Rückwärtsgang-Zwischenrad (23R) ermöglicht, zu beginnen, während eines Kämmens mit dem ersten Zahnrad (21R) mit dem zweiten Zahnrad (22R) zu kämmen, wobei die Schaltsteuerungsvorrichtung **dadurch gekennzeichnet ist, dass**
eine Steuerungseinheit (30), welche das Antrieben des Aktuators (33) steuert, bereitgestellt ist, um die Rückwärtsgangstufe zu bilden,
die Steuerungseinheit (30) eine Wiederholungssteuerung eines Bildens der Rückwärtsgangstufe wieder durchführt, wenn die Bildung der Rückwärtsgangstufe fehlschlägt, und
eine erste Wiederholungssteuerung durchgeführt wird, wenn das Rückwärtsgang-Zwischenrad (23R) nicht in der Lage ist, mit dem ersten Zahnrad (21R) zu kämmen, und an einer Position (P1) zwischen der Neutralposition und der ersten Position stoppt, und
eine zweiten Wiederholungssteuerung, welche sich von der ersten Wiederholungssteuerung unterscheidet, durchgeführt wird, wenn das Rückwärtsgang-Zwischenrad (23R) nicht in der Lage ist, mit dem zweiten Zahnrad (22R) zu kämmen, und an einer Position (P2) zwischen der ersten Position und der zweiten Position stoppt.

2. Schaltsteuerungsvorrichtung für das Hybridfahrzeug nach Anspruch 1,
wobei, wenn das Rückwärtsgang-Zwischenrad (23R) nicht in der Lage ist, mit dem ersten Zahnrad (21R) zu kämmen, und an einer Position (P1) zwischen der Neutralposition und der ersten Position stoppt, der Aktuator (33) angetrieben wird, sodass das Rückwärtsgang-Zwischenrad (23R) einmal in Richtung der Neutralposition bewegt wird, um von dem ersten Zahnrad (21R) getrennt zu sein, und dann wieder in Richtung der ersten Position bewegt wird.

3. Schaltsteuerungsvorrichtung für das Hybridfahrzeug nach Anspruch 1 oder 2, wobei die Steuerungseinheit (30) den Aktuator (33) antreibt, sodass das Rückwärtsgang-Zwischenrad (23R) gegen das zweite Zahnrad (22R) gedrückt wird, und den elektrischen Motor (8) antreibt, sodass die Phase des zweiten Zahnrads (22R) mit Bezug zu dem Rückwärtsgang-Zwischenrad (23R) geändert ist, wenn das Rückwärtsgang-Zwischenrad (23R) nicht in der Lage ist, mit dem zweiten Zahnrad (22R) zu kämmen, und an einer Position (P2) zwischen der ersten Position und der zweiten Position stoppt.

4. Schaltsteuerungsvorrichtung für das Hybridfahrzeug nach Anspruch 3, wobei die Steuerungseinheit (30) die Phase des zweiten Zahnrads (22R) mit Bezug zu dem Rückwärtsgang-Zwischenrad (23R) durch ein Antreiben des elektrischen Motors (8) in der Rotationsrichtung ändert, wenn sich das Fahrzeug (1) rückwärts bewegt.

5. Schaltsteuerungsvorrichtung für das Hybridfahrzeug nach Anspruch 3, wobei die Steuerungseinheit (30) den Aktuator (33) antreibt, um die Rückwärtsgangstufe wieder zu bilden, nach einem Bilden der Vorwärtsgangstufe, wenn der elektrische Motor (8) nicht in der Lage ist, angetrieben zu werden.

## Revendications

1. Dispositif de commande de changement de vitesse d'un véhicule hybride comprenant :
un moteur (2) générant une force d'entraînement pour le fonctionnement ;
une transmission (20) formant un étage de transmission d'un étage de marche avant ou d'un étage de marche arrière et affectant une entrée de rotation du moteur (2) ;
un actionneur (33) réalisant une opération de changement de rapport sur l'étage de marche avant et l'étage de marche arrière ; et
un moteur électrique (8) disposé dans un chemin de transmission de puissance entre la transmission (20) et une roue d'entraînement (6L, 6R) et générant une force d'entraînement pour le fonctionnement,
dans lequel dans la transmission (20), un pignon fou de marche arrière (23R) se déplace séquentiellement d'un point mort à une position de formation d'étage de marche arrière, permettant au pignon fou de marche arrière (23R) de s'engrener avec à la fois un premier pignon (21R) et un deuxième pignon (22R) pour terminer la formation de l'étage de marche arrière, par le biais d'une première position permettant au pignon fou de marche arrière (23R) de commencer à s'engrener avec le premier pignon (21R) et une seconde position permettant au pignon fou de marche arrière (23R) de commencer à s'engrener avec le deuxième pignon (22R) tout en s'engrenant avec le premier pignon (21R), le dispositif de commande de changement de vitesse étant **caractérisé en ce que** :
une unité de commande (30) commandant la commande de l'actionneur (33) est fournie pour former l'étage de marche arrière,
l'unité de commande (30) réalise une commande de relance consistant à former l'étage de marche arrière une nouvelle fois lorsque la formation de l'étage de marche arrière échoue, et
une première commande de relance est réalisée lorsque le pignon fou de marche arrière (23R) n'est pas apte à s'engrener avec le premier pignon (21R) et s'arrête au niveau d'une position (P1) entre le point mort et la première position et
une deuxième commande de relance, différente de la première commande de relance, est réalisée lorsque le pignon fou de marche arrière (23R) n'est pas apte à s'engrener avec le deuxième pignon (22R) et s'arrête au niveau d'une position (P2) entre la première position et la seconde position.

2. Dispositif de commande de vitesse pour le véhicule hybride selon la revendication 1, dans lequel lorsque le pignon fou de marche arrière (23R) n'est pas apte à s'engrener avec le premier pignon (21R) et s'arrête au niveau d'une position (P1) entre le point mort et la première position, l'actionneur (33) est commandé de sorte que le pignon fou de marche arrière (23R) soit déplacé en direction du point mort une fois pour être séparé du premier pignon (21R) et soit ensuite déplacé en direction de la première position une nouvelle fois.

3. Dispositif de commande de changement de vitesse pour le véhicule hybride selon la revendication 1 ou 2,
dans lequel l'unité de commande (30) commande l'actionneur (33) de sorte que le pignon fou de marche arrière (23R) soit pressé contre le deuxième pignon (22R) et entraîne le moteur électrique (8) de sorte que la phase du deuxième pignon (22R) par rapport au pignon fou de marche arrière (23R) soit modifiée lorsque le pignon fou de marche arrière (23R) n'est pas apte à s'engrener avec le deuxième pignon (22R) et s'arrête au niveau d'une position (P2) entre la première position et la seconde position.

4. Dispositif de commande de changement de vitesse pour le véhicule hybride selon la revendication 3,
dans lequel l'unité de commande (30) modifie la phase du deuxième pignon (22R) par rapport au pignon fou de marche arrière (23R) en commandant le moteur électrique (8) dans la direction de rotation lorsque le véhicule (1) recule.

5. Dispositif de commande de changement de vitesse pour le véhicule hybride selon la revendication 3,
dans lequel l'unité de commande (30) commande l'actionneur (33) pour former l'étage de marche arrière une nouvelle fois après la formation de l'étage de marche avant une fois lorsque le moteur électrique (8) n'est pas apte à être commandé.
